(19) Europäisches Patentamt
European Patent Office
Office européen des brevets

(11) **EP 4 614 359 A1**

(12) **EUROPEAN PATENT APPLICATION**

(43) Date of publication:
**10.09.2025 Bulletin 2025/37**

(21) Application number: **25161994.6**

(22) Date of filing: **06.03.2025**

(51) International Patent Classification (IPC):
***G06F 18/22*** (2023.01)  ***G06F 18/2321*** (2023.01)
***G06N 20/00*** (2019.01)

(52) Cooperative Patent Classification (CPC):
**G06F 18/22; G06F 18/2321; G06N 3/047;
G06N 3/088; G06N 7/01; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.03.2024 US 202418597251**

(71) Applicant: **Robert Bosch GmbH
70469 Stuttgart (DE)**

(72) Inventors:
• **Qiu, Chen
Pittsburgh, PA, 15219 (US)**
• **Perini, Lorenzo
50126 Florence (IT)**
• **Schmedding, Sabrina
75233 Tiefenbronn (DE)**
• **Rudolph, Maja
Madison, WI, 53726 (US)**
• **Lin, Wan-Yi
Wexford, PA, 15090 (US)**
• **Leslie, Berberian
Pittsburgh, PA, 15217 (US)**

(74) Representative: **Isarpatent
Patent- und Rechtsanwälte Partg mbB
Friedrichstraße 31
80801 München (DE)**

(54) **SYSTEM AND METHOD FOR DATA QUALITY METRIC FOR SYNTHETIC ANOMALIES VALUATION**

(57) A method of labeling data for machine learning models wherein the method includes generating one or more synthetic datasets that includes one or more labels and one or more anomalies associated with a training dataset; determining, utilizing an anomaly detector, an estimate associated with a class-conditional probability of the one or more synthetic datasets in response to mapping anomaly scores assigned by the anomaly detector, determining, utilizing a data density estimator, a data density associated with the one or more synthetic datasets in response to a function of a rarity score or a kernel density estimation function associated with the training dataset, determining a quality score associated with the one or more synthetic datasets utilizing at least the data density and an estimate associated with class-conditional probability, and outputting the quality score associated an anomaly of the one or more synthetic datasets.

FIG. 1

**Description**

TECHNICAL FIELD

The present disclosure relates to machine learning networks, including those that are utilized for creating synthetic data or data sets.

BACKGROUND

Traditional data quality metrics evaluate an example by quantifying its impact on the performance of model when included for training. For instance, several methods such as DATASHAP compute the marginal contribution of an example $(x,y) \in D$ by bootstrapping D and measuring the impact of using $(x,y)$ when included in the bootstrapped training set. Alternatively, DATAOOB is an out-of-bag (OOB) evaluator that measures the contribution of each example to out-of-bag accuracy, namely the accuracy of the prediction on the non-selected examples in the bootstrap. Finally, methods like LAVAEVALUATOR and influence functions (INF) quantify the rate at which a utility value changes when a particular example is more weighted. Unfortunately, all existing data quality metrics target evaluating the impact of training examples, and none of them are tailored to estimating the quality of an external anomaly.

Anomaly detection aims at identifying examples that do not behave as expected/normal. Because anomalies are rare and unexpected, collecting real anomalous examples is often challenging in several applications. In addition, learning an anomaly detector with limited (or no) anomalies often yields to poor prediction performance. One option is to employ auxiliary synthetic anomalies to improve the model training. However, synthetic anomalies may be of poor quality: anomalies that are unrealistic or indistinguishable from normal samples may deteriorate the detector's performance. Unfortunately, no existing metrics quantify the quality of auxiliary anomalies.

SUMMARY

A first embodiment discloses a method of labeling data for machine learning models wherein the method includes generating one or more synthetic datasets utilizing a training dataset, wherein the one or more synthetic datasets includes one or more labels and one or more anomalies associated with the training dataset; determining, utilizing an anomaly detector of the machine learning model, an estimate associated with a class-conditional probability of the one or more synthetic datasets in response to mapping anomaly scores assigned by the anomaly detector; determining, utilizing a data density estimator, a data density associated with the one or more synthetic datasets in response to a function of a rarity score or a kernel density estimation function associated with the training dataset; determining a quality score associated with the one or more synthetic datasets utilizing at least the data density and an estimate associated with class-conditional probability; and outputting the quality score associated an anomaly of the one or more synthetic datasets.

A second embodiment discloses a system configured to label data utilizing a machine learning (ML) model that includes an input interface configured to receive input data from a sensor, wherein the sensor includes a video, radar, LiDAR, sound, sonar, ultrasonic, motion, or thermal imaging sensor. The system includes a processor, in communication with the input interface, wherein the processor is programmed to generate one or more synthetic datasets utilizing a training dataset, wherein the one or more synthetic datasets includes one or more labels and one or more anomalies associated with the training dataset, determine, utilizing an anomaly detector of the ML model, an estimate associated with a class-conditional probability of the one or more synthetic datasets in response to mapping anomaly scores assigned by the anomaly detector, determine, utilizing a data density estimator, a data density associated with the one or more synthetic datasets in response to a function of a rarity score or a kernel density estimation function associated with the training dataset, determine a quality score associated with the one or more synthetic datasets utilizing at least the data density and an estimate associated with class-conditional probability, and output the quality score associated with one of the one or more anomalies of the one or more synthetic datasets.

A third embodiment discloses a computer-program product storing instructions which, when executed by a computer, cause the computer to generate one or more synthetic datasets utilizing a training dataset, wherein the one or more synthetic datasets includes one or more anomalies associated with the training dataset, determine, utilizing an anomaly detector of the ML model, an estimate associated with a class-conditional probability of the one or more synthetic datasets in response to mapping anomaly scores assigned by the anomaly detector, determine, utilizing a data density estimator, a data density associated with the one or more synthetic datasets in response to a function of a rarity score or a kernel density estimation function associated with the training dataset, determine a quality score associated with the one or more synthetic datasets utilizing at least the data density and an estimate associated with class-conditional probability, and output the quality score associated with one of the one or more anomalies of the one or more synthetic datasets.

BRIEF DESCRIPTION OF THE DRAWINGS

FIG. 1 shows a system for training a neural network, according to an embodiment.

FIG. 2 shows a computer-implemented method for training and utilizing a neural network, according to an embodiment.

FIG. 3 shows a flow chart associated with a method of evaluating anomalies according to one embodiment.

FIG. 4 shows a plot associated with anomalies for various methodologies of evaluating anomalies.

FIG. 5 depicts a schematic diagram of an interaction between a computer-controlled machine and a control system, according to an embodiment.

FIG. 6 depicts a schematic diagram of the control system of Figure 5 configured to control a vehicle, which may be a partially autonomous vehicle, a fully autonomous vehicle, a partially autonomous robot, or a fully autonomous robot, according to an embodiment.

FIG. 7 depicts a schematic diagram of the control system of Figure 5 configured to control a manufacturing machine, such as a punch cutter, a cutter or a gun drill, of a manufacturing system, such as part of a production line.

FIG. 8 depicts a schematic diagram of the control system of Figure 5 configured to control a power tool, such as a power drill or driver, that has an at least partially autonomous mode.

FIG. 9 depicts a schematic diagram of the control system of Figure 5 configured to control an automated personal assistant.

FIG. 10 depicts a schematic diagram of the control system of Figure 5 configured to control a monitoring system, such as a control access system or a surveillance system.

FIG. 11 depicts a schematic diagram of the control system of Figure 5 configured to control an imaging system, for example an MRI apparatus, x-ray imaging apparatus or ultrasonic apparatus.

DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative bases for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical application. Various combinations and modifications of the features consistent with the teachings of this disclosure, however, could be desired for particular applications or implementations.

"A", "an", and "the" as used herein refers to both singular and plural referents unless the context clearly dictates otherwise. By way of example, "a processor" programmed to perform various functions refers to one processor programmed to perform each and every function, or more than one processor collectively programmed to perform each of the various functions.

A system and embodiment disclosed below discloses a novel metric that estimates the quality of synthetic anomalies by capturing an anomaly detector's uncertainty. Intuitively, if an anomaly detector has high uncertainty in predictions, the example is likely to be either too close (e.g., overlapping) to the normal training examples, or in an unexplored region (e.g., an out-of-distribution) of the example space. Specifically, an auxiliary anomaly falling into the normal region may indicate that it is indistinguishable from a normal counterpart, while a synthetic anomaly falling in an unexplored region is likely to be unrealistic to occur in practice.

Anomalies are often connected to adverse events, such as defects in production lines, excess water usage, failures in petroleum extraction, or breakdowns in wind turbines. Collecting anomalous examples is usually a challenging task, since anomalies are caused by rare, sparse, and unexpected events. For instance, in an industrial production line, a defect may occur only after months of successful production. Moreover, the limited anomalies observed may be a biased sample, i.e. it does not comprehensively represent all potential anomalous cases. For instance, defects might be initially similar to each other (e.g., they are caused by the same event) and evolve over time because of changes in the production line.

Thus, traditionally machine learning models for anomaly detection suffer from having access to limited and biased anomalies. One option is to collect auxiliary synthetic anomalies (e.g., by leveraging generative models and employ them to enhance the dataset. However, synthetic anomalies may be of poor quality: images of defective products may have imperceptible defects, thus being indistinguishable from the normal counterpart, or, on the contrary, be too heavily defective, resulting unrealistic. Including poor-quality anomalies is likely to have the effect of deteriorating a model's performance. Unfortunately, no existing approach can quantify the quality of synthetic anomalies, such that only high-quality examples would enrich the training set.

In this disclosure, a system and method may be utilizing an example-wise metric that measures the quality of synthetic auxiliary anomalies. The model's performance can be improved by including the high-quality auxiliary anomalies into the training set according to embodiments discloses herein.

Existing data quality metrics may target the evaluation of training samples but may not be tailored to estimate the quality of an auxiliary anomaly. The proposed approach in the embodiments disclosed improves over prior work by solving a number of challenges.

A small and potentially biased set of anomalies makes evaluating an ML-based anomaly detector's performance unreliable. Thus, the variation of a sample's utility may not be indicative of its contribution to the test performance. To solve this, the system and method may take both model prediction and the data density into account, making a data valuation metric more robust to an unreliable test set.

While existing data quality metrics retrain a model for each training example, doing so for an external set of anomalies might be prohibitively expensive, as one may want to evaluate a large set of auxiliary anomalies. Thus, the number of trainings cannot scale with the size of the external set. Our proposed method does not require retraining and becomes more efficient than existing works.

The invention can be used to evaluate the quality of synthetic or auxiliary anomalies in anomaly detection. High-quality auxiliary anomalies according to the data valuation metric can be included into the training set to improve the training of anomaly detection models or included into the validation set to help the hyperparameter-tuning and model selection.

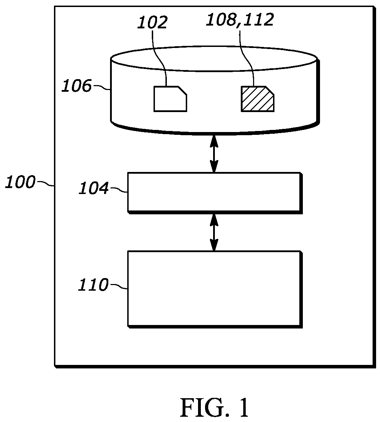

Reference is now made to the embodiments illustrated in the Figures, which can apply these teachings to a machine learning model or neural network. FIG. 1 shows a system 100 for training a neural network, e.g. a deep neural network. The system 100 may comprise an input interface for accessing training data 102 for the neural network. For example, as illustrated in FIG. 1, the input interface may be constituted by a data storage interface 104 which may access the training data 102 from a data storage 106. For example, the data storage interface 104 may be a memory interface or a persistent storage interface, e.g., a hard disk or an SSD interface, but also a personal, local or wide area network interface such as a Bluetooth, Zigbee or Wi-Fi interface or an ethernet or fiberoptic interface. The data storage 106 may be an internal data storage of the system 100, such as a hard drive or SSD, but also an external data storage, e.g., a network-accessible data storage.

In some embodiments, the data storage 106 may further comprise a data representation 108 of an untrained version of the neural network which may be accessed by the system 100 from the data storage 106. It will be appreciated, however, that the training data 102 and the data representation 108 of the untrained neural network may also each be accessed from a different data storage, e.g., via a different subsystem of the data storage interface 104. Each subsystem may be of a type as is described above for the data storage interface 104. In other embodiments, the data representation 108 of the untrained neural network may be internally generated by the system 100 on the basis of design parameters for the neural network, and therefore may not explicitly be stored on the data storage 106. The system 100 may further comprise a processor subsystem 110 which may be configured to, during operation of the system 100, provide an iterative function as a substitute for a stack of layers of the neural network to be trained. Here, respective layers of the stack of layers being substituted may have mutually shared weights and may receive as input an output of a previous layer, or for a first layer of the stack of layers, an initial activation, and a part of the input of the stack of layers. The processor subsystem 110 may be further configured to iteratively train the neural network using the training data 102. Here, an iteration of the training by the processor subsystem 110 may comprise a forward propagation part and a backward propagation part. The processor subsystem 110 may be configured to perform the forward propagation part by, amongst other operations defining the forward propagation part which may be performed, determining an equilibrium point of the iterative function at which the iterative function converges to a fixed point, wherein determining the equilibrium point comprises using a numerical root-finding algorithm to find a root solution for the iterative function minus its input, and by providing the equilibrium point as a substitute for an output of the stack of layers in the neural network. The system 100 may further comprise an output interface for outputting a data representation 112 of the trained neural network, this data may also be referred to as trained model data 112. For example, as also illustrated in FIG. 1, the output interface may be constituted by the data storage interface 104, with said interface being in these embodiments an input/output ('IO') interface, via which the trained model data 112 may be stored in the data storage 106. For example, the data representation 108 defining the 'untrained' neural network may during or after the training be replaced, at least in part by the data representation 112 of the trained neural network, in that the parameters of the neural network, such as weights, hyperparameters and other types of parameters of neural networks, may be adapted to reflect the training on the training data 102. This is also illustrated in FIG. 1 by the reference numerals 108, 112 referring to the same data record on the data storage 106. In other embodiments, the data representation 112 may be stored separately from the data representation 108 defining the 'untrained' neural network. In some embodiments, the output interface may be separate from the data storage interface 104, but may in general be of a type as described above for the data storage interface 104.

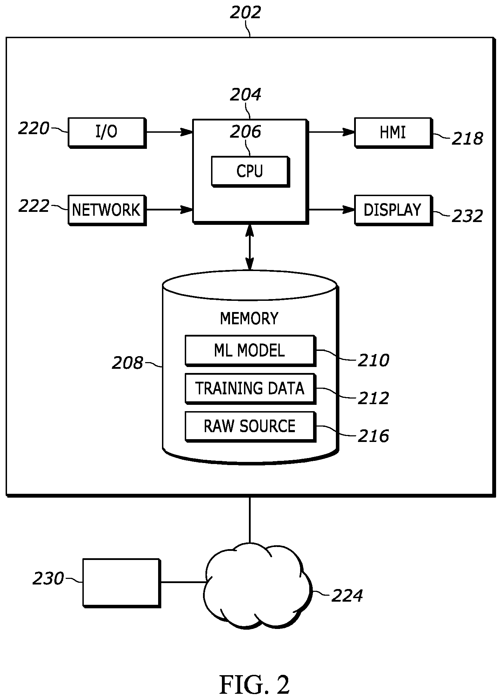

The structure of the system 100 is one example of a system that may be utilized to train the machine-learning models described herein. Additional structure for operating and training the machine-learning models is shown in FIG. 2.

FIG. 2 depicts a system 200 to implement the machine-learning models described herein. The system 200 can be implemented to perform synthetic data generation and scoring as described herein. The system 200 may include at least one computing system 202. The computing system 202 may include at least one processor 204 that is operatively connected to a memory unit 208. The processor 204 may include one or more integrated circuits that implement the functionality of a central processing unit (CPU) 206. The CPU 206 may be a commercially available processing unit that implements an instruction set such as one of the x86, ARM, Power, or MIPS instruction set families. During operation, the CPU 206 may execute stored program instructions that are retrieved from the memory unit 208. The stored program instructions may include software that controls operation of the CPU 206 to perform the operation described herein. In some examples, the processor 204 may be a system on a chip (SoC) that integrates functionality of the CPU 206, the memory unit 208, a network interface, and input/output interfaces into a single integrated device. The computing system 202 may implement an operating system for managing various aspects of the operation. While one processor 204, one CPU 206, and one memory 208 is shown in FIG. 2, of course more than one of each can be utilized in an overall system.

The memory unit 208 may include volatile memory and non-volatile memory for storing instructions and data. The non-volatile memory may include solid-state memories, such as NAND flash memory, magnetic and optical storage media, or any other suitable data storage device that retains data when the computing system 202 is deactivated or loses electrical power. The volatile memory may include static and dynamic random-access memory (RAM) that stores program instructions and data. For example, the memory unit 208 may store a machine-learning model 210 or algorithm, a training dataset 212 for the machine-learning model 210, raw source dataset 216.

The computing system 202 may include a network interface device 222 that is configured to provide communication with external systems and devices. For example, the network interface device 222 may include a wired and/or wireless Ethernet interface as defined by Institute of Electrical and Electronics Engineers (IEEE) 802.11 family of standards. The network interface device 222 may include a cellular communication interface for communicating with a cellular network (e.g., 3G, 4G, 5G). The network interface device 222 may be further configured to provide a communication interface to an external network 224 or cloud.

The external network 224 may be referred to as the world-wide web or the Internet. The external network 224 may establish a standard communication protocol between computing devices. The external network 224 may allow information and data to be easily exchanged between computing devices and networks. One or more servers 230 may be in communication with the external network 224.

The computing system 202 may include an input/output (I/O) interface 220 that may be configured to provide digital and/or analog inputs and outputs. The I/O interface 220 is used to transfer information between internal storage and external input and/or output devices (e.g., HMI devices). The I/O 220 interface can includes associated circuity or BUS networks to transfer information to or between the processor(s) and storage. For example, the I/O interface 220 can include digital I/O logic lines which can be read or set by the processor(s), handshake lines to supervise data transfer via the I/O lines; timing and counting facilities, and other structure known to provide such functions. Examples of input devices include a keyboard, mouse, sensors, etc. Examples of output devices include monitors, printers, speakers, etc. The I/O interface 220 may include additional serial interfaces for communicating with external devices (e.g., Universal Serial Bus (USB) interface).

The computing system 202 may include a human-machine interface (HMI) device 218 that may include any device that enables the system 200 to receive control input. Examples of input devices may include human interface inputs such as keyboards, mice, touchscreens, voice input devices, and other similar devices. The computing system 202 may include a display device 232. The computing system 202 may include hardware and software for outputting graphics and text information to the display device 232. The display device 232 may include an electronic display screen, projector, printer or other suitable device for displaying information to a user or operator. The computing system 202 may be further configured to allow interaction with remote HMI and remote display devices via the network interface device 222.

The system 200 may be implemented using one or multiple computing systems. While the example depicts a single computing system 202 that implements all of the described features, it is intended that various features and functions may be separated and implemented by multiple computing units in communication with one another. The particular system architecture selected may depend on a variety of factors.

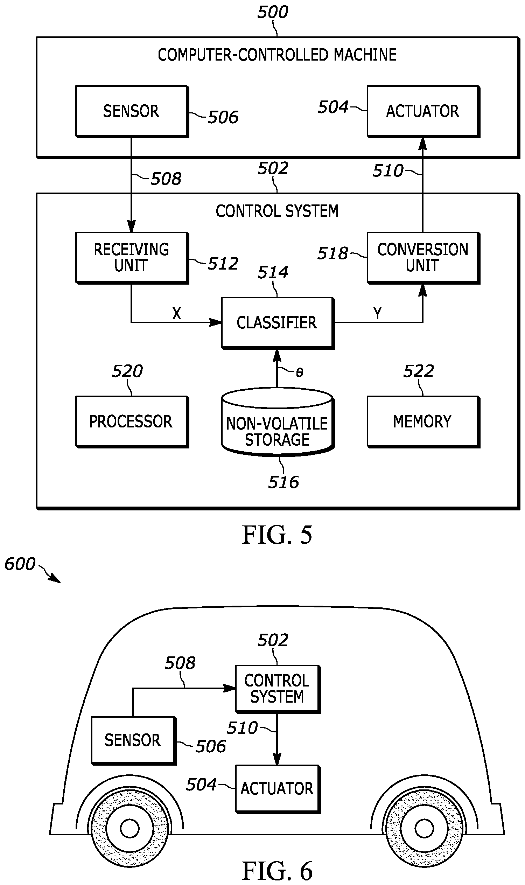

The system 200 may implement a machine-learning algorithm 210 that is configured to analyze the raw source dataset 216. The raw source dataset 216 may include raw or unprocessed sensor data that may be representative of an input dataset for a machine-learning system. The raw source dataset 216 may include video, video segments, images, text-based information, audio or human speech, time series data (e.g., a pressure sensor signal over time), and raw or partially processed sensor data (e.g., radar map of objects). Several different examples of inputs are shown and described with reference to FIGS. 5-11. In some examples, the machine-learning algorithm 210 may be a neural network algorithm (e.g., deep neural network) that is designed to perform a predetermined function. For example, the neural network algorithm may be configured in automotive applications to identify street signs or pedestrians in images. The machine-learning algorithm(s) 210 may include algorithms configured to operate the models described herein.

The computer system 200 may store a training dataset 212 for the machine-learning algorithm 210. The training dataset 212 may represent a set of previously constructed data for training the machine-learning algorithm 210. The training dataset 212 may be used by the machine-learning algorithm 210 to learn weighting factors associated with a neural network algorithm. The training dataset 212 may include a set of source data that has corresponding outcomes or results that the machine-learning algorithm 210 tries to duplicate via the learning process. In this example, the training dataset 212 may include input images that include an object (e.g., a street sign). The input images may include various scenarios in which the objects are identified.

The machine-learning algorithm 210 may be operated in a learning mode using the training dataset 212 as input. The machine-learning algorithm 210 may be executed over a number of iterations using the data from the training dataset 212. With each iteration, the machine-learning algorithm 210 may update internal weighting factors based on the achieved results. For example, the machine-learning algorithm 210 can compare output results (e.g., a reconstructed or supplemented image, in the case where image data is the input) with those included in the training dataset 212. Since the training dataset 212 includes the expected results, the machine-learning algorithm 210 can determine when performance is acceptable. After the machine-learning algorithm 210 achieves a predetermined performance level (e.g., 100% agreement with the outcomes associated with the training dataset 212), or convergence, the machine-learning algorithm 210 may be executed using data that is not in the training dataset 212. It should be understood that in this disclosure, "convergence" can mean a set (e.g., predetermined) number of iterations have occurred, or that the residual is sufficiently small (e.g., the change in the approximate probability over iterations is changing by less than a threshold), or other convergence conditions. The trained machine-learning algorithm 210 may be applied to new datasets to generate annotated data.

The machine-learning algorithm 210 may be configured to identify a particular feature in the raw source data 216. The raw source data 216 may include a plurality of instances or input dataset for which supplementation results are desired. For example, the machine-learning algorithm 210 may be configured to identify the presence of a road sign in video images and annotate the occurrences. The machine-learning algorithm 210 may be programmed to process the raw source data 216 to identify the presence of the particular features. The machine-learning algorithm 210 may be configured to identify a feature in the raw source data 216 as a predetermined feature (e.g., road sign). The raw source data 216 may be derived from a variety of sources. For example, the raw source data 216 may be actual input data collected by a machine-learning system. The raw source data 216 may be machine generated for testing the system. As an example, the raw source data 216 may include raw video images from a camera.

In an example, the raw source data 216 may include image data representing an image. Applying the machine-learning algorithms described herein, the output can be a score that may be utilize to evaluate the quality of synthetic.

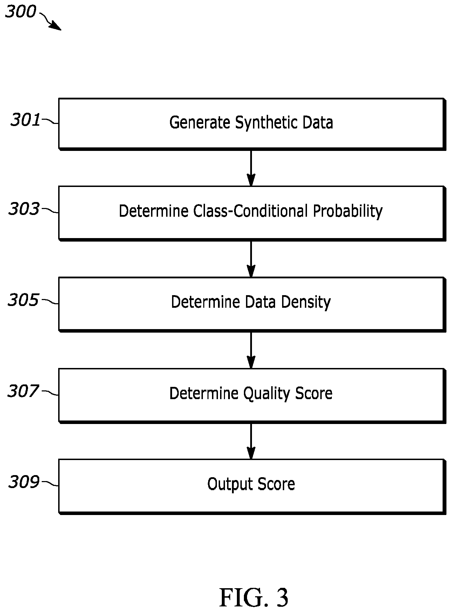

FIG. 3 illustrates a flow chart for evaluating anomalies associated with a synthetic data set. The flow chart 300 may be reflective of an illustrative embodiment. One key idea is to model each example's probability of being an anomaly $p_x$. The quality score that is proposed is the expected posterior of this parameter.

At step 301, a system may generate a synthetic dataset. The synthetic dataset may include one or more labels and one or more anomalies associated with the training dataset. The labels may be associated with classifying the data of the training dataset, in one example.

For quantifying the detector's uncertainty, the system may assume a Bayesian perspective and model the anomaly detection problem as

$$Y \mid X = x \sim BERNOULLI(p_x), \ p_x \sim BETA(\alpha_0, \beta_0),$$

where $p_x$ is the class probability of being anomalous that has a Beta distribution with parameters $\alpha_0, \beta_0 \in \mathbb{R}$ as prior. The parameter can be interpreted as the probability of the example being an anomaly.

Given an example *x,* let's assume that the system can observe *N* pseudo observations, labels $y_1,...,y_n$ drawn from $P(Y|X = x)$. Then, the system can derive the posterior distribution of $p_x$ using the traditional Bayesian update.

$$p_x| \, y_1,...,y_n \, \sim \, BETA(\alpha_0 \, + \, \alpha_1, \beta_0 \, + \, n \, - \, \alpha_1) \text{ (Equation 1)}$$

where

$$\alpha_1 \, = \, \sum_i^n \mathbb{1}(y_i = 1)$$

is the number of labels from the anomaly class.

However, assuming to have access to m labels for the same instance is unrealistic, which makes it hard to compute $\alpha_1$. One can estimate $\alpha_1$ by simulating to draw n examples where $nP(X = x) \approx m$, along which only $P(Y = 1|X = x)$ would belong to the anomaly class. Thus one can estimate $\alpha_1$ with the data density and the conditional probability as

$$\widehat{\alpha_1} \, = \, n \, \times \, P(\widehat{X = x}) \, \times \, P(Y \, = \, \widehat{1|X} \, = \, x) \, ,$$

At step 303, the system determine class-conditional probability. Specifically, an embodiment of the system and method accounts for both (i) an example x's class conditional probability $P(Y = 1|X = x)$, which commonly reflects the underlying aleatoric uncertainty of the data, and (ii) an example *x*'s density $P(X = x)$, which reflects the epistemic uncertainty. The expectation of the posterior in Equation (1) reflects the quality of an auxiliary anomaly x: if the expected posterior is high, the evidence is enough to rely on the expected conditional probability for evaluating the auxiliary anomaly, while if it is low, the quality reflects our prior belief.

Computing $P(Y = 1|X = x)$, in anomaly detection is a hard task because (1) class probabilities are generally unreliable for imbalanced classification tasks, and (2) the available anomalies might be non-representative of the whole anomaly class (i.e., the system and method may have access to a biased set). This makes traditional calibration techniques often impractical for anomaly detection. However, the system may mainly care about having probabilities that satisfy two properties. First, they must be coherent with the detector's prediction, namely a predicted anomaly (normal) needs a probability greater (lower) than 0.5. Second, the system may want the proportion of predicted anomalies to match the expected proportion of true anomalies. This guarantees that, if the detector's ranking is accurate, the class predictions are optimally computed.

For this task, the system may utilize and employ a squashing scaler to map the anomaly scores *f(x)* assigned by the detector *f* into [0, 1] probability values:

$$P(Y \, = \, \widehat{1|X} \, = \, x) = 1 - 2^{-\left(\frac{f(x)}{\lambda}\right)^2}$$

where $\lambda$ is the detector's decision threshold.

At step 305 the system may determine an estimate associated with the data density. The system may estimate $P(X = x)$ with the rarity score, which is fast to compute and weakly affected by the curse of dimensionality. Roughly speaking, the rarity score (1) creates k-NN spheres centered on each training example, and (2) assigns the smallest radius of the sphere that contains the given synthetic example. If the synthetic example falls outside of all spheres, it is considered too uncommon and gets a rarity equal to 0. Formally, given a sample *x,* the estimated data density equals the rarity score which is a function $r_k \, : \, \mathbb{R}^d \, \to \, \mathbb{R}$ such that

$$P(\widehat{X = x}) = r_k(x) = \begin{cases} 0 & if \, x \notin \bigcup_{x_i \in D} B_k(x_i) \\ \min_{x_i \in D: \, x \in B_k(x_i)} NN_k(x_i) & otherwise \end{cases}$$

where $NN_k(x_i)$ is the distance between $x_i$ and its k-th nearest neighbor in *D,* and $B_k(x_i) = \{x|d(x_i, x) \le NN_k(x_i)\}$ is the k-NN sphere with $x_i$ as center and $NN_k(x_i)$ as radius.

At step 307, the system may compute the quality scores. Using our estimates for the data density and the conditional probability, the system may compute the quality of a synthetic auxiliary anomaly $x$ by taking the expectation of $p_x$'s posterior distribution with our estimated $\widehat{\alpha_1}$:

$$\phi(x) = \frac{\alpha_0 + \widehat{\alpha_1}}{\alpha_0 + \beta_0 + m} = \frac{\alpha_0 + n \times P(\widehat{X = x}) \times P(Y = \widehat{1}|X = x)}{\alpha_0 + \beta_0 + n \times P(\widehat{X = x})}$$

Thus, the system may output the score at step 309. The score may determine the quality of a synthetic auxiliary anomaly. It may be beneficial to determine how the system behaves when subject to (1) large training sets (n→+∞); (2) small training sets or zero-density examples; and (3) high-class conditional probabilities. Given a realistic anomaly $x_R$, an indistinguishable anomaly $x_1$ and an unrealistic anomaly $x_U$, it may be beneficial to determine if the system and method *rank* $\varphi(x_R) > \varphi(x_1)$, $\varphi(x_U)$. The system and method below may have three relevant properties (1) convergence to class conditional probabilities; (2) convergence to the prior's mean; and (3) quality of distinguishable anomalies increases with their density.

With respect to convergence to class conditional probabilities, the number of training examples indicates how strong the empirical evidence is. That is, the detector $f$ has enough evidence to estimate properly the class conditional probability. As a consequence, increasing $n$ makes EAP converge to the class conditional probability:

$$\phi(x) \to P(Y = \widehat{1}|X = x) \ \ for \ \ n \to +\infty$$

With respect to convergence to the prior's mean, given an example $x$, if there is no empirical evidence to update $p_x$ the posterior distribution remains equal to the prior. Because lack of evidence can be due to either a relatively small n or a low density $P(\widehat{X = x})$,

$$\phi(x) \to \frac{\alpha_0}{\alpha_0 + \beta_0} \ \ for \ \ n \to 0 \ or \ P(X = x) \to 0,$$

With respect to the quality of evident anomalies increases with their density, given that an example $x$ has class conditional probability equal to 1 (e.g., it is easily discriminated from the normal data by $f$), its quality depends only on its density. In fact, the closer to the training examples, the higher the density, the higher the quality:

$$\phi(x) = 1 - \frac{\beta_0}{\alpha_0 + \beta_0 + n \times P(\widehat{X = x})}$$

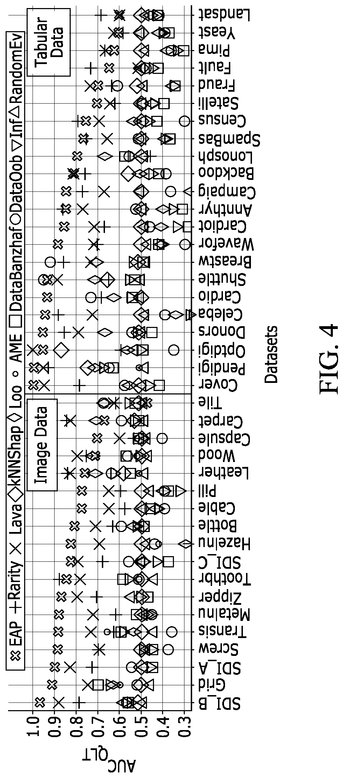

FIG. 4 illustrates a plot illustrating scores associated with anomalies for varies methodologies. The plot illustrates the average "Area Under the Receiving Operator Curve" (AUCQLT) obtained by each method on a per-dataset basis (left-hand side for image, righthand side for tabular). The embodiment utilized is labeled as EAP and achieves the highest (i.e. best) performance for most datasets, beating the runner-ups RARITY and LAVA on, respectively, 30 and 31 datasets out of 40.

The machine-learning models described herein can be used in many different applications, and not just in the context of road sign image processing. Additional applications where anomaly detection or classification may be used are shown in FIGS. 6-11. Structure used for training and using the machine-learning models for these applications (and other applications) are exemplified in FIG. 5. FIG. 5 depicts a schematic diagram of an interaction between a computer-controlled machine 500 and a control system 502. Computer-controlled machine 500 includes actuator 504 and sensor 506. Actuator 504 may include one or more actuators and sensor 506 may include one or more sensors. Sensor 506 is configured to sense a condition of computer-controlled machine 500. Sensor 506 may be configured to encode the sensed condition into sensor signals 508 and to transmit sensor signals 508 to control system 502. Non-limiting examples of sensor 506 include video, radar, LiDAR, ultrasonic and motion sensors. In one embodiment, sensor 506 is an optical sensor configured to sense optical images of an environment proximate to computer-controlled machine 500.

Control system 502 is configured to receive sensor signals 508 from computer-controlled machine 500. As set forth below, control system 502 may be further configured to compute actuator control commands 510 depending on the sensor signals and to transmit actuator control commands 510 to actuator 504 of computer-controlled machine 500.

As shown in FIG. 5, control system 502 includes receiving unit 512. Receiving unit 512 may be configured to receive sensor signals 508 from sensor 506 and to transform sensor signals 508 into input signals x. In an alternative embodiment, sensor signals 508 are received directly as input signals x without receiving unit 512. Each input signal x may be a portion of each sensor signal 508. Receiving unit 512 may be configured to process each sensor signal 508 to product each input signal x. Input signal x may include data corresponding to an image recorded by sensor 506.

Control system 502 includes a classifier 514. Classifier 514 may be configured to classify input signals x into one or more labels using a machine learning (ML) algorithm, such as a neural network described above. Classifier 514 is configured to be parametrized by parameters, such as those described above (e.g., parameter $\theta$). Parameters $\theta$ may be stored in and provided by non-volatile storage 516. Classifier 514 is configured to determine output signals y from input signals x. Each output signal y includes information that assigns one or more labels to each input signal x. Classifier 514 may transmit output signals y to conversion unit 518. Conversion unit 518 is configured to covert output signals y into actuator control commands 510. Control system 502 is configured to transmit actuator control commands 510 to actuator 504, which is configured to actuate computer-controlled machine 500 in response to actuator control commands 510. In another embodiment, actuator 504 is configured to actuate computer-controlled machine 500 based directly on output signals y.

Upon receipt of actuator control commands 510 by actuator 504, actuator 504 is configured to execute an action corresponding to the related actuator control command 510. Actuator 504 may include a control logic configured to transform actuator control commands 510 into a second actuator control command, which is utilized to control actuator 504. In one or more embodiments, actuator control commands 510 may be utilized to control a display instead of or in addition to an actuator.

In another embodiment, control system 502 includes sensor 506 instead of or in addition to computer-controlled machine 500 including sensor 506. Control system 502 may also include actuator 504 instead of or in addition to computer-controlled machine 500 including actuator 504.

As shown in FIG. 5, control system 502 also includes processor 520 and memory 522. Processor 520 may include one or more processors. Memory 522 may include one or more memory devices. The classifier 514 (e.g., machine-learning algorithms, such as those described above with regard to pre-trained classifier 306) of one or more embodiments may be implemented by control system 502, which includes non-volatile storage 516, processor 520 and memory 522.

Non-volatile storage 516 may include one or more persistent data storage devices such as a hard drive, optical drive, tape drive, non-volatile solid-state device, cloud storage or any other device capable of persistently storing information. Processor 520 may include one or more devices selected from high-performance computing (HPC) systems including high-performance cores, microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on computer-executable instructions residing in memory 522. Memory 522 may include a single memory device or a number of memory devices including, but not limited to, random access memory (RAM), volatile memory, non-volatile memory, static random access memory (SRAM), dynamic random access memory (DRAM), flash memory, cache memory, or any other device capable of storing information.

Processor 520 may be configured to read into memory 522 and execute computer-executable instructions residing in non-volatile storage 516 and embodying one or more ML algorithms and/or methodologies of one or more embodiments. Non-volatile storage 516 may include one or more operating systems and applications. Non-volatile storage 516 may store compiled and/or interpreted from computer programs created using a variety of programming languages and/or technologies, including, without limitation, and either alone or in combination, Java, C, C++, C#, Objective C, Fortran, Pascal, Java Script, Python, Perl, and PL/SQL.

Upon execution by processor 520, the computer-executable instructions of non-volatile storage 516 may cause control system 502 to implement one or more of the ML algorithms and/or methodologies as disclosed herein. Non-volatile storage 516 may also include ML data (including data parameters) supporting the functions, features, and processes of the one or more embodiments described herein.

The program code embodying the algorithms and/or methodologies described herein is capable of being individually or collectively distributed as a program product in a variety of different forms. The program code may be distributed using a computer readable storage medium having computer readable program instructions thereon for causing a processor to carry out aspects of one or more embodiments. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts or diagrams. In certain alternative embodiments, the functions, acts, and/or operations specified in the flowcharts and diagrams may be re-ordered, processed serially, and/or processed concurrently consistent with one or more embodiments. Moreover, any of the flowcharts and/or diagrams may include more or fewer nodes or blocks than those illustrated consistent with one or more embodiments.

The processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

FIG. 6 depicts a schematic diagram of control system 502 configured to control vehicle 600, which may be an at least partially autonomous vehicle or an at least partially autonomous robot. Vehicle 600 includes actuator 504 and sensor 506. Sensor 506 may include one or more video sensors, cameras, radar sensors, ultrasonic sensors, LiDAR sensors, and/or position sensors (e.g. GPS). One or more of the one or more specific sensors may be integrated into vehicle 600. In the context of sign-recognition and processing as described herein, the sensor 506 is a camera mounted to or integrated into the vehicle 600. Alternatively or in addition to one or more specific sensors identified above, sensor 506 may include a software module configured to, upon execution, determine a state of actuator 504. One non-limiting example of a software module includes a weather information software module configured to determine a present or future state of the weather proximate vehicle 600 or other location.

Classifier 514 of control system 502 of vehicle 600 may be configured to detect objects in the vicinity of vehicle 600 dependent on input signals x. In such an embodiment, output signal y may include information characterizing the vicinity of objects to vehicle 600. Actuator control command 510 may be determined in accordance with this information. The actuator control command 510 may be used to avoid collisions with the detected objects.

In embodiments where vehicle 600 is an at least partially autonomous vehicle, actuator 504 may be embodied in a brake, a propulsion system, an engine, a drivetrain, or a steering of vehicle 600. Actuator control commands 510 may be determined such that actuator 504 is controlled such that vehicle 600 avoids collisions with detected objects. Detected objects may also be classified according to what classifier 514 deems them most likely to be, such as pedestrians or trees. The actuator control commands 510 may be determined depending on the classification. In a scenario where an adversarial attack may occur, the system described above may be further trained to better detect objects or identify a change in lighting conditions or an angle for a sensor or camera on vehicle 600.

In other embodiments where vehicle 600 is an at least partially autonomous robot, vehicle 600 may be a mobile robot that is configured to carry out one or more functions, such as flying, swimming, diving and stepping. The mobile robot may be an at least partially autonomous lawn mower or an at least partially autonomous cleaning robot. In such embodiments, the actuator control command 510 may be determined such that a propulsion unit, steering unit and/or brake unit of the mobile robot may be controlled such that the mobile robot may avoid collisions with identified objects.

In another embodiment, vehicle 600 is an at least partially autonomous robot in the form of a gardening robot. In such embodiment, vehicle 600 may use an optical sensor as sensor 506 to determine a state of plants in an environment proximate vehicle 600. Actuator 504 may be a nozzle configured to spray chemicals. Depending on an identified species and/or an identified state of the plants, actuator control command 510 may be determined to cause actuator 504 to spray the plants with a suitable quantity of suitable chemicals.

Vehicle 600 may be an at least partially autonomous robot in the form of a domestic appliance. Non-limiting examples of domestic appliances include a washing machine, a stove, an oven, a microwave, or a dishwasher. In such a vehicle 600, sensor 506 may be an optical sensor configured to detect a state of an object which is to undergo processing by the household appliance. For example, in the case of the domestic appliance being a washing machine, sensor 506 may detect a state of the laundry inside the washing machine. Actuator control command 510 may be determined based on the detected state of the laundry.

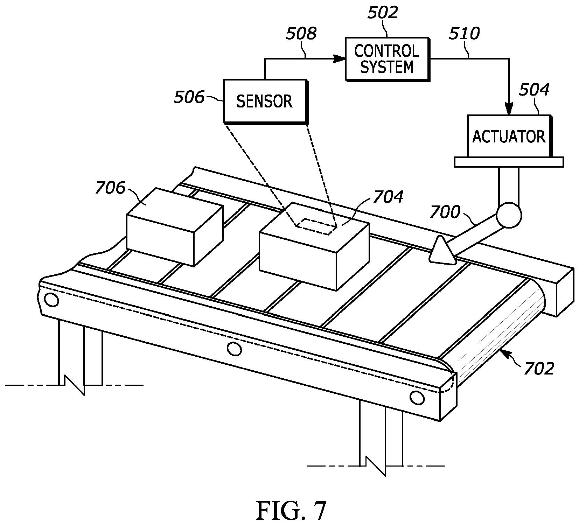

FIG. 7 depicts a schematic diagram of control system 502 configured to control system 700 (e.g., manufacturing machine), such as a punch cutter, a cutter or a gun drill, of manufacturing system 702, such as part of a production line. Control system 502 may be configured to control actuator 504, which is configured to control system 700 (e.g., manufacturing machine).

Sensor 506 of system 700 (e.g., manufacturing machine) may be an optical sensor configured to capture one or more properties of manufactured product 704. Classifier 514 may be configured to determine a state of manufactured product 704 from one or more of the captured properties. Actuator 504 may be configured to control system 700 (e.g., manufacturing machine) depending on the determined state of manufactured product 704 for a subsequent manufacturing step of manufactured product 704. The actuator 504 may be configured to control functions of system 700 (e.g., manufacturing machine) on subsequent manufactured product 106 of system 700 (e.g., manufacturing machine) depending on the determined state of manufactured product 704.

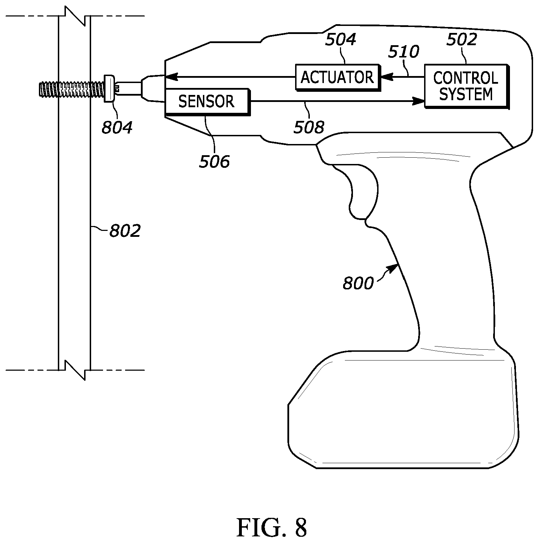

FIG. 8 depicts a schematic diagram of control system 502 configured to control power tool 800, such as a power drill or driver, that has an at least partially autonomous mode. Control system 502 may be configured to control actuator 504, which is configured to control power tool 800.

Sensor 506 of power tool 800 may be an optical sensor configured to capture one or more properties of work surface 802 and/or fastener 804 being driven into work surface 802. Classifier 514 may be configured to determine a state of work surface 802 and/or fastener 804 relative to work surface 802 from one or more of the captured properties. The state may be fastener 804 being flush with work surface 802. The state may alternatively be hardness of work surface 802. Actuator 504 may be configured to control power tool 800 such that the driving function of power tool 800 is adjusted depending on the determined state of fastener 804 relative to work surface 802 or one or more captured properties of work surface 802. For example, actuator 504 may discontinue the driving function if the state of fastener 804 is flush relative to work surface 802. As another non-limiting example, actuator 504 may apply additional or less torque depending on the hardness of work surface 802.

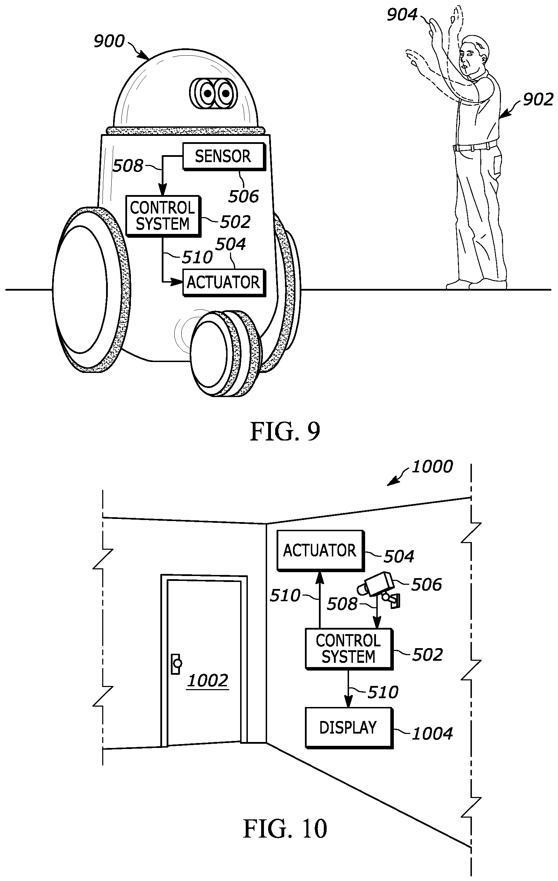

FIG. 9 depicts a schematic diagram of control system 502 configured to control automated personal assistant 900. Control system 502 may be configured to control actuator 504, which is configured to control automated personal assistant 900. Automated personal assistant 900 may be configured to control a domestic appliance, such as a washing machine, a stove, an oven, a microwave or a dishwasher.

Sensor 506 may be an optical sensor and/or an audio sensor. The optical sensor may be configured to receive video images of gestures 904 of user 902. The audio sensor may be configured to receive a voice command of user 902.

Control system 502 of automated personal assistant 900 may be configured to determine actuator control commands 510 configured to control system 502. Control system 502 may be configured to determine actuator control commands 510 in accordance with sensor signals 508 of sensor 506. Automated personal assistant 900 is configured to transmit sensor signals 508 to control system 502. Classifier 514 of control system 502 may be configured to execute a gesture recognition algorithm to identify gesture 904 made by user 902, to determine actuator control commands 510, and to transmit the actuator control commands 510 to actuator 504. Classifier 514 may be configured to retrieve information from non-volatile storage in response to gesture 904 and to output the retrieved information in a form suitable for reception by user 902.

FIG. 10 depicts a schematic diagram of control system 502 configured to control monitoring system 1000. Monitoring system 1000 may be configured to physically control access through door 1002. Sensor 506 may be configured to detect a scene that is relevant in deciding whether access is granted. Sensor 506 may be an optical sensor configured to generate and transmit image and/or video data. Such data may be used by control system 502 to detect a person's face.

Classifier 514 of control system 502 of monitoring system 1000 may be configured to interpret the image and/or video data by matching identities of known people stored in non-volatile storage 516, thereby determining an identity of a person. Classifier 514 may be configured to generate and an actuator control command 510 in response to the interpretation of the image and/or video data. Control system 502 is configured to transmit the actuator control command 510 to actuator 504. In this embodiment, actuator 504 may be configured to lock or unlock door 1002 in response to the actuator control command 510. In other embodiments, a non-physical, logical access control is also possible.

Monitoring system 1000 may also be a surveillance system. In such an embodiment, sensor 506 may be an optical sensor configured to detect a scene that is under surveillance and control system 502 is configured to control display 1004. Classifier 514 is configured to determine a classification of a scene, e.g. whether the scene detected by sensor 506 is suspicious. Control system 502 is configured to transmit an actuator control command 510 to display 1004 in response to the classification. Display 1004 may be configured to adjust the displayed content in response to the actuator control command 510. For instance, display 1004 may highlight an object that is deemed suspicious by classifier 514. Utilizing an embodiment of the system disclosed, the surveillance system may predict objects at certain times in the future showing up.

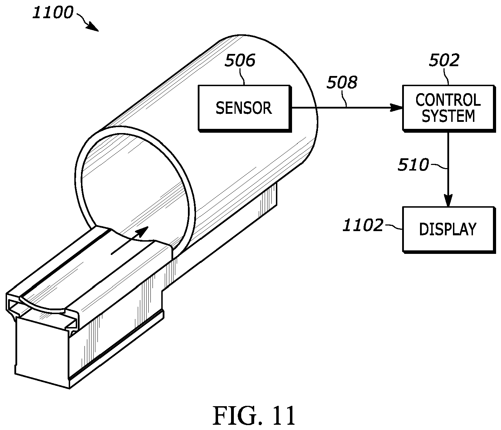

FIG. 11 depicts a schematic diagram of control system 502 configured to control imaging system 1100, for example an MRI apparatus, x-ray imaging apparatus or ultrasonic apparatus. Sensor 506 may, for example, be an imaging sensor. Classifier 514 may be configured to determine a classification of all or part of the sensed image. Classifier 514 may be configured to determine or select an actuator control command 510 in response to the classification obtained by the trained neural network. For example, classifier 514 may interpret a region of a sensed image to be potentially anomalous. In this case, actuator control command 510 may be determined or selected to cause display 1102 to display the imaging and highlighting the potentially anomalous region.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

**Claims**

1. A method of labeling data for machine learning (ML) models, the method comprising:

   generating one or more synthetic datasets utilizing a training dataset, wherein the one or more synthetic datasets includes one or more labels and one or more anomalies associated with the training dataset;
   determining, utilizing an anomaly detector of the ML model, an estimate associated with a class-conditional probability of the one or more synthetic datasets in response to mapping anomaly scores assigned by the anomaly detector;
   determining, utilizing a data density estimator, a data density associated with the one or more synthetic datasets in response to a function of a rarity score or a kernel density estimation function associated with the training dataset;
   determining a quality score associated with the one or more synthetic datasets utilizing at least the data density and an estimate associated with class-conditional probability; and
   outputting the quality score associated an anomaly of the one or more synthetic datasets.

2. The method of claim 1, wherein the anomaly is a synthetic anomaly generated by data augmentations or generative models and not existing in training datasets.

3. The method of claim 1, wherein the dataset includes one or more images.

4. The method of claim 1, wherein the method includes utilizing a squashing scaler to map one or more anomaly scores into one or more probability values.

5. The method of claim 1, wherein the training dataset includes a set of one or more images.

6. The method of claim 1, wherein the rarity score creates one or more spheres utilizing a k-nearest neighbor model.

7. The method of claim 1, determining the estimate associated with class-conditional probability of the one or more synthetic datasets is further in response to mapping scores between 0 and 1.

8. The method of claim 1, wherein the method includes taking a reciprocal value of the rarity score and normalizing the reciprocal value.

9. A system configured to label data utilizing a machine learning (ML) model, comprising:

   an input interface configured to receive input data from a sensor, wherein the sensor includes a video, radar, LiDAR, sound, sonar, ultrasonic, motion, or thermal imaging sensor;
   a processor, in communication with the input interface, wherein the processor is programmed to:

   generate one or more synthetic datasets utilizing a training dataset, wherein the one or more synthetic datasets includes one or more labels and one or more anomalies associated with the training dataset;
   determine, utilizing an anomaly detector of the ML model, an estimate associated with a class-conditional probability of the one or more synthetic datasets in response to mapping anomaly scores assigned by the anomaly detector;
   determine, utilizing a data density estimator, a data density associated with the one or more synthetic datasets in response to a function of a rarity score or a kernel density estimation function associated with the training dataset;
determine a quality score associated with the one or more synthetic datasets utilizing at least the data density and an estimate associated with class-conditional probability; and
output the quality score associated with one of the one or more anomalies of the one or more synthetic datasets.

10. The system of claim 9, wherein the anomaly is a synthetic anomalies generated by data augmentations or generative models and not existing in training datasets.

11. The system of claim 9, wherein the dataset includes one or more images.

12. The system of claim 9, wherein the anomaly detector includes an anomaly detection model.

13. The system of claim 9, wherein the data density estimator includes a data density model.

14. The system of claim 9, wherein the rarity score creates one or more spheres utilizing a k-nearest neighbor model.

15. The system of claim 9, wherein the system includes a squashing scaler to map one or more anomaly scores into one or more probability values.

16. A computer-program product storing instructions which, when executed by a computer, cause the computer to:

generate one or more synthetic datasets utilizing a training dataset, wherein the one or more synthetic datasets includes one or more anomalies associated with the training dataset;
determine, utilizing an anomaly detector of the ML model, an estimate associated with a class-conditional probability of the one or more synthetic datasets in response to mapping anomaly scores assigned by the anomaly detector;
determine, utilizing a data density estimator, a data density associated with the one or more synthetic datasets in response to a function of a rarity score or a kernel density estimation function associated with the training dataset;
determine a quality score associated with the one or more synthetic datasets utilizing at least the data density and an estimate associated with class-conditional probability; and
output the quality score associated with one of the one or more anomalies of the one or more synthetic datasets.

17. The computer-program product of claim 16, wherein the one or more synthetic datasets pertain to data associated with video, camera, radar, LiDAR, sound, sonar, ultrasonic, motion, or thermal imaging sensor.

18. The computer-program product of claim 16, wherein the synthetic dataset includes one or more labels.

19. The computer-program product of claim 16, wherein the rarity score creates one or more spheres utilizing a k-nearest neighbor model.

20. The computer-program product of claim 16, wherein the instructions includes utilizing a squashing scaler to map one or more anomaly scores into one or more probability values.

FIG. 1

FIG. 2

*300*

| 301 | Generate Synthetic Data |
|---|---|

| 303 | Determine Class-Conditional Probability |
|---|---|

| 305 | Determine Data Density |
|---|---|

| 307 | Determine Quality Score |
|---|---|

| 309 | Output Score |
|---|---|

FIG. 3

FIG. 4

EP 4 614 359 A1

500

COMPUTER-CONTROLLED MACHINE

SENSOR ~506

504~ ACTUATOR

~508
502
510~

CONTROL SYSTEM

RECEIVING UNIT ~512

514

518~ CONVERSION UNIT

X → CLASSIFIER → Y

θ

520

PROCESSOR

NON-VOLATILE STORAGE

516

522

MEMORY

**FIG. 5**

600

508
502
CONTROL SYSTEM

510~

SENSOR ~506

504~ ACTUATOR

**FIG. 6**

FIG. 7

FIG. 8

FIG. 9

FIG. 10

FIG. 11

Europäisches
Patentamt

European
Patent Office

Office européen
des brevets

# EUROPEAN SEARCH REPORT

**Application Number**

EP 25 16 1994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/342640 A1 (HAZARD CHRISTOPHER JAMES [US] ET AL) 26 October 2023 (2023-10-26) <br> * paragraph [0026] - paragraph [0028] * <br> * paragraph [0035] * <br> * paragraph [0050] * <br> * paragraph [0061] - paragraph [0063] * <br> * paragraph [0078] * <br> * paragraph [0125]; figure 6 * <br> * paragraph [0128] - paragraph [0154] * <br> * paragraph [0190] * <br> * paragraph [0208] * <br> * paragraph [0212] - paragraph [0232] * <br> * paragraph [0213] - paragraph [0286] * <br> * paragraph [0289] * <br> * paragraph [0295] - paragraph [0296] * <br> * paragraph [0308] - paragraph [0310] * <br> * paragraph [0311] - paragraph [0322] * <br> * paragraph [0334] * <br> - - - - - | 1-20 | INV. <br> G06F18/22 <br> G06F18/2321 <br> G06N20/00 |

**TECHNICAL FIELDS SEARCHED (IPC)**

G06F
G06N
G06V

The present search report has been drawn up for all claims

| Place of search | Date of completion of the search | Examiner |
|---|---|---|
| Munich | 17 July 2025 | Herri, Edmond |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 1994

This annex lists the patent family members relating to the patent documents cited in  the above-mentioned European search report.
The members are as contained in the European Patent Office EDP file on
The European Patent Office is in no way liable for these particulars which are merely given for the purpose of information.

17-07-2025

| Patent document cited in search report | Publication date | Patent family member(s) | Publication date |
|---|---|---|---|
| US 2023342640    A1 | 26-10-2023 | US    2021312307 A1 | 07-10-2021 |
| | | US    2023244964 A1 | 03-08-2023 |
| | | US    2023342640 A1 | 26-10-2023 |
| | | US    2025173590 A1 | 29-05-2025 |

EPO FORM P0459

For more details about this annex : see Official Journal of the European Patent Office, No. 12/82